# EUROPÄISCHE PATENTSCHRIFT

(11) **EP 2 961 505 B1**
(45) Veröffentlichungstag und Bekanntmachung des Hinweises auf die Patenterteilung: **23.09.2020**
(21) Anmeldenummer: 14704527.2
(22) Anmeldetag: 13.02.2014
(51) Int. Cl.: B01D 15/00, B67C 7/00, C02F 1/28

(54) **VERFAHREN UND VORRICHTUNG ZUR AUFBEREITUNG VON CIP-MEDIEN**
METHOD AND DEVICE FOR PROCESSING CIP MEDIA
PROCÉDÉ ET DISPOSITIF DE PRÉPARATION D'AGENTS DE NETTOYAGE CIP

(30) Priorität: 28.02.2013 DE 102013102017
(43) Veröffentlichungstag der Anmeldung: 06.01.2016
(73) Patentinhaber: KHS GmbH, 44143 Dortmund (DE)
(72) Erfinder: VETTER, Elke, 67269 Grünstadt (DE)
(86) Internationale Anmeldenummer: PCT/EP2014/000395
(87) Internationale Veröffentlichungsnummer: WO 2014/131493

(56) Entgegenhaltungen:
- WO-A1-01/55292
- US-A- 4 824 577
- S M Kulkarni ET AL: "Reuse Limits and Regeneration of Solutions for Cleaning Dairy Equipment", University of Nebraska -Lincoln; DigitalCommons@University of Nebraska -Lincoln; Faculty Publications in Food Science and Technology Faculty Publications in Food Science and Technology. Paper 60; Journal of Dairy Science, Bd. 75 1. Januar 1975 (1975-01-01), Seiten 1095-1100, XP055114340, Gefunden im Internet: URL:http://digitalcommons.unl.edu/cgi/view content.cgi?article=1062&context=foodscief acpub&sei-redir=1&referer=http://scholar.g oogle.de/scholar_url?hl=de&q=http://digita lcommons.unl.edu/cgi/viewcontent.cgi%3Fart icle%3D1062%26context%3Dfoodsciefacpub&sa= X&scisig=AAGBfm299KZ5bTNsI0-rc832cRFjqPMV5 w&oi=schol [gefunden am 2014-04-16]
- A.J. MAWSON: "Regeneration of cleaning and processing solutions using membrane technologies", TRENDS IN FOOD SCIENCE & TECHNOLOGY, Bd. 8, Nr. 1, 1. Januar 1997 (1997-01-01), Seiten 7-13, XP055114330, ISSN: 0924-2244, DOI: 10.1016/S0924-2244(97)01000-5
- KRINGS U ET AL: "Adsorbents for the recovery of aroma compounds in fermentation processes", JOURNAL OF CHEMICAL TECHNOLOGY AND BIOTECHNOLOGY, JOHN WILEY & SONS LTD, UNITED KINGDOM, Bd. 58, 1. Juni 1993 (1993-06-01), Seiten 293-299, XP000404030, ISSN: 0268-2575
- DATABASE WPI Week 197504 Thomson Scientific, London, GB; AN 1975-06290W XP002723427, & JP S49 52788 A (MITSUI PETROCHEM IND CO LTD) 22. Mai 1974 (1974-05-22)
- Y. KISO ET AL: "Adsorption properties of aromatic compounds on polyethylene as a membrane material", JOURNAL OF APPLIED POLYMER SCIENCE, Bd. 74, Nr. 5, 31. Oktober 1999 (1999-10-31), Seiten 1037-1043, XP055114483, ISSN: 0021-8995, DOI: 10.1002/(SICI)1097-4628(19991031)74:5<1037 ::AID-APP1>3.0.CO;2-L

## Beschreibung

Die Erfindung bezieht sich auf ein Verfahren zur Aufbereitung von bei Anlagen zur Behandlung von Behältern verwendeten flüssigen CIP-Medien gemäß Oberbegriff des Patentanspruchs 1 und eine Vorrichtung zur Reinigung von CIP-Medien gem. Oberbegriff des Patentanspruchs 5.

Insbesondere Behälterbehandlungsmaschinen in Form von Füllmaschinen zum Befüllen von Behältern mit Getränken oder anderen flüssigen Produkten erfordern eine turnusmäßige Reinigung und/oder Desinfektion unter Verwendung entsprechender Reinigungs- und/oder Desinfektionsmedien.

Dabei ist bekannt, dass Aromastoffe von Getränken vorhergehender Chargen, in Dichtungsmaterialien migrieren und nach der Reinigung der Anlage und Anlagenkomponenten an das folgende Produkt abgegeben werden, so dass es möglicherweise nicht mehr verkaufsfähig ist.

Üblicherweise wird diese Reinigung und/oder Desinfektion als CIP-Reinigung ("Cleaning in place") unter Verwendung entsprechender flüssiger CIP-Medien durchgeführt, und zwar so, dass diese von einer Anlagenkomponente oder einem Aggregat bereitgestellten und der Füllmaschine aus einem CIP-Vorratsgefäß zugeführten CIP-Medien die zu reinigenden und/oder zu desinfizierenden Bereiche der Füllmaschine durchströmen und anschließend an das Aggregat für eine erneute Verwendung zurückgeführt werden. Insbesondere auch vor einem Produktwechsel ist bei Füllmaschinen eine derartige CIP-Reinigung erforderlich, um zu vermeiden, dass Bestandteile, insbesondere auch Aromastoffe aus dem Produkt vor dem Produktwechsel in das Produkt nach dem Produktwechsel gelangen, und um dadurch u.a. die geschmackliche Qualität des nach dem Produktwechsel abgefüllten Produktes durch Fehlaromen (Off-Flavour) zu vermeiden.

Bisher lässt sich allerdings nicht verhindern, dass Aromastoffe in der Regel unpolare Aromatstoffe, bspw. aus der Gruppe der Aldehyde, Ketone, Ester, Phenole, Anisole und Heteroaromate durch die CIP-Medien nicht von den Bestandteilen der Füllmaschine abgereinigt werden können oder sich in den zurückgeführten CIP-Medien anreichern und sich diese Aromastoffe dann bei der CIP-Reinigung an oder in Bereichen von produktführenden Leitungen und/oder Kanäle der Füllmaschine an- und/oder einlagern, insbesondere an oder in aus polymerem, auch elastomerem Material bestehenden Komponenten, wie Dichtungen usw. Diese eingelagerten Aromastoffe werden dann nach der CIP-Reinigung als Fehlaroma (Off-Flavour) an die abzufüllenden Produkte abgeben, so dass es dadurch ebenfalls zu einer Beeinträchtigung der geschmacklichen Qualität dieser Produkte kommt. Aus diesem Grunde ist bisher für die CIP-Medien nur eine verkürzte Standzeit möglich, d.h. es ist ein häufiger, zusätzliche Kosten verursachender Austausch der CIP-Medien erforderlich oder eine Abfüllung von Produkten stark unterschiedlicher Geschmacksintensität, z.B. Mineralwasser und Energy-Getränke auf einer Abfüllanlage ist nicht möglich.

Aus der WO 01/55292 (02.08.2001) ist die Verwendung von Polyethylen zur Entfernung von Chloranisol aus Wein bekannt. Die Entfernung von Aromastoffen aus wässrigen Lösungen mittels Aktivkohle ist in US 4,824,577, (25.04.1989) beschrieben. Y.Kiso et al. (Adsorption properties of aromatic compounds on polyethylene as a membrane material", JOURNAL OF APPLIED POLYMER SCIENCE, Bd. 74, Nr. 5, 31.10.1999, S.1037-1043) offenbart die adsorbierende Eigenschaften einer PE-PVC Copolymermembran für Aromastoffe.

A.J. MAWSON "Regeneration of cleaning and processing solutions using membrane technologies",TRENDS IN FOOD SCIENCE & TECHNOLOGY, Bd. 8, Nr. 1, 1. Januar 1997, Seiten 7-13, beschreibt den Einsatz von Polymermembranen in Nano-, Mikro- oder Ultrafiltrationsanlagen zur Behandlung von CIP-Medien in insbesondere Flaschenbehandlungsanlagen (S.8 "Recovery of cleaning solutions").

Aufgabe der Erfindung ist es, hier Abhilfe zu schaffen und ein Verfahren aufzuzeigen, so dass die Standzeit der in einer Anlage verwendeten CIP-Medien wesentlich erhöht werden kann. Zur Lösung dieser Aufgabe ist ein Verfahren und eine Vorrichtung zur Aufbereitung von CIP-Medien entsprechend dem Patentanspruch 1 bzw. 5 ausgebildet.

Mit dem erfindungsgemäßen Verfahren werden in vorteilhafter Weise in den jeweiligen CIP-Medien vorhandene Aromastoffe bzw. Aromate, beispielsweise solche aus den Gruppen der Aldehyde, Ketone, Ester, Phenole, Anisole und/oder Heteroaromate durch Adsorption mit dem adsorbierenden polymeren Material entfernt, zumindest aber soweit reduziert, dass es zu einer Beeinträchtigung des abzufüllenden Füllgutes durch Fehlaromen nicht kommt. Als adsorbierendes polymeres Material eignen sich grundsätzlich für die Verwendung bei Lebensmittel zugelassene vernetzte und einen festen oder elastischen Aggregatzustand aufweisende Polymere. Erfindungsgemäß ist das adsorbierende polymere Material Polyethylen.

Das Reduzieren oder Entfernen der Aromastoffe aus dem jeweiligen CIP-Medium erfolgt bei der Erfindung generell durch einen direkten Kontakt des adsorbierenden polymeren Materials mit dem zu behandelnden CIP-Medium, was auf unterschiedlichste Weise realisierbar ist, beispielsweise durch Verwendung des adsorbierenden polymeren Materials in einer von dem CIP-Medium durchströmten Einrichtung und/oder in einem von dem CIP-Medium eingenommenen Raum, beispielsweise Kammer, Tank oder Vorrichtungsbehälter.

Das polymere adsorbierende Material kommt bezogen auf die jeweilige Menge des zu reinigenden oder aufzubereitenden CIP-Mediums bevorzugt in folgendem Mengenbereich zum Einsatz:
2g/L - 200g/L, bevorzugt 6g/L - 60g/L,
wobei g die Menge des adsorbierenden polymeren Materials in Gramm und L die Menge des aufzubereitenden CIP-Mediums in Litern sind.

Unter "Aufbereitung von CIP-Medien" oder unter "Reinigung von CIP-Medien" ist im Sinne der Erfindung das Entfernen von Aromastoffen oder Aromaten (aromatische Kohlenwasserstoffe) aus den CIP-Medien zu verstehen. Dabei ist unter "Entfernung von Fehlaromen von halogenierten Anisolen und Phenolen im Sinne der Erfindung insbesondere das Entfernen des umgangssprachlich als "Korkschmecker" bezeichneten Fehlaromas zu verstehen.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Der besondere Vorteil in der Aufbereitung von CIP-Medien besteht darin, dass anders als bei der Aromaentfernung aus dem Produkt selbst, keinerlei Rücksicht genommen werden muss, gewünschte Aromastoffe in ausreichendem Maße im Produkt zu belassen. Es muss also kein Trennschnitt zwischen Aromastoffen gezogen werden. Dies vereinfacht die Prozessführung und Auswahl von Ab- bzw. Adsorptionsmitteln erheblich. Dies ist deshalb besonders bedeutsam, weil für das Entfernen von Fehlaromen durch halogenierte Anisole und Phenole aus Wein oder weinhaltigen Produkten eine zeitliche Begrenzung des Kontaktes zwischen dem Adsorbtionsmittel und dem Wein eingehalten werden muss, und von zwar 4 bis 48 Stunden, bevorzugt 12 bis 24 Stunden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1.: in einem vereinfachten Funktionsdiagramm eine Anlage mit einer Behälterbehandlungsmaschine in Form einer Füllmaschine und mit einem Aggregat zur Bereitstellung von CIP-Medien für eine CIP-Reinigung der Behälterbehandlungsmaschine;
- Fig. 2: in einer schematischen Darstellung eine Polymerstruktur eines adsorbierenden polymeren Materials mit in dieser Struktur durch Adsorption eingelagerten Aromastoffen.

In den Figuren ist 1 eine Anlage mit einer Behälterbehandlungsmaschine 2 in Form einer Füllmaschine zum Befüllen von Flaschen oder anderen Behältern mit flüssigen Produkten bzw. Getränken. Die Behälterbehandlungsmaschine 2 wird insbesondere auch zum Befüllen von Behältern mit Produkten unterschiedlicher Art und/oder mit unterschiedlichem Geschmack genutzt, insbesondere auch für Wein oder weinhaltige Produkte.

Der Behälterbehandlungsmaschine 2 ist ein Aggregat 3 zugeordnet, welches flüssige Reinigungs- und/oder Desinfektionsmedien, d.h. CIP-Medien für eine CIP-Reinigung der Behälterbehandlungsmaschine 2 bereitstellt und bei der (CIP-Reinigung) zumindest sämtliche mit dem Produkt in Kontakt kommende Bereiche dieser Maschine von dem jeweiligen CIP-Medium durchströmt werden.

Bevorzugt werden bei der CIP-Reinigung zeitlich nacheinander unterschiedliche CIP-Medien verwendet, beispielsweise in einem ersten Reinigungsschritt zum Vorspülen entionisiertes Wasser, z.B. in Trinkwasserqualität mit 4° dH, in einem zweiten, zeitlich folgenden Reinigungsschritt wässrige Lauge, bspw. Natronlauge, in einem dritten , zeitlich folgenden Reinigungsschritt für ein Zwischenspülen entionisiertes Wasser, in einem vierten Reinigungsschritt Säure, beispielsweise Salpetersäure oder Phosphorsäure, und in einem fünften Reinigungsschritt zum Nachspülen entionisiertes Wasser. Die Schritte drei und vier sind optional.

Die CIP-Medien werden der Behälterbehandlungsmaschine 2 jeweils über einen CIP-Vorlauf 4 zugeführt und aus der Behälterbehandlungsmaschine 2 über einen CIP-Rücklauf 5 an das Aggregat 3 zurückgeführt, in welchem CIP-Medien getrennt gesammelt und für eine erneute Verwendung in einem Stapeltank aufbereitet werden.

In einer Variante des Verfahrens, werden für die Bereitstellung der CIP-Medien und deren Bestandteile dem Aggregat 3 entsprechend dem Pfeil 6 Frischwasser und Wasserdampf sowie entsprechend dem Pfeil 7 Lauge- und Säure-Konzentrat zugeführt.

Die CIP-Reinigung der Behälterbehandlungsmaschine 2 erfolgt auf jeden Fall vor einem Produktwechsel, um zu vermeiden, dass Bestandteile und dabei insbesondere auch Aromastoffe eines bis zum Produktwechsel abgefüllten Produktes in das nach dem Produktwechsel abgefüllte Produkt gelangen und hierdurch u.a. die geschmackliche Qualität des nach dem Produktwechsel abgefüllten Produktes durch Fehlaromen (Off-Flavour) beeinträchtigt wird.

Ein Problem bisheriger Anlagen besteht darin, dass sich die Aromastoffe oder Aromate aus den Produkten in Komponenten der Behälterbehandlungsmaschine 2, beispielsweise in Dichtungen der produktführenden Leitungen oder Kanäle einlagern und während des anschließenden Füllens an das jeweilige Produkt wieder frei geben werden, mit der Folge unerwünschter Fehlaromen im abgefüllten Produkt.

Dabei können die an das Aggregat 3 zurückgeführten CIP-Medien nicht alle Aromastoffe abreinigen und weiterhin reichern sich auch Aromastoffe in den CIP Medien selbst an, so dass durch ihre mehrmalige Verwendung die Aromastoffe nachfolgend über die CIP-Medien zurück an die Komponenten der Behälterbehandlungsmaschine 2 abgegeben werden, von wo aus diese wieder in das Produkt gelangen können.

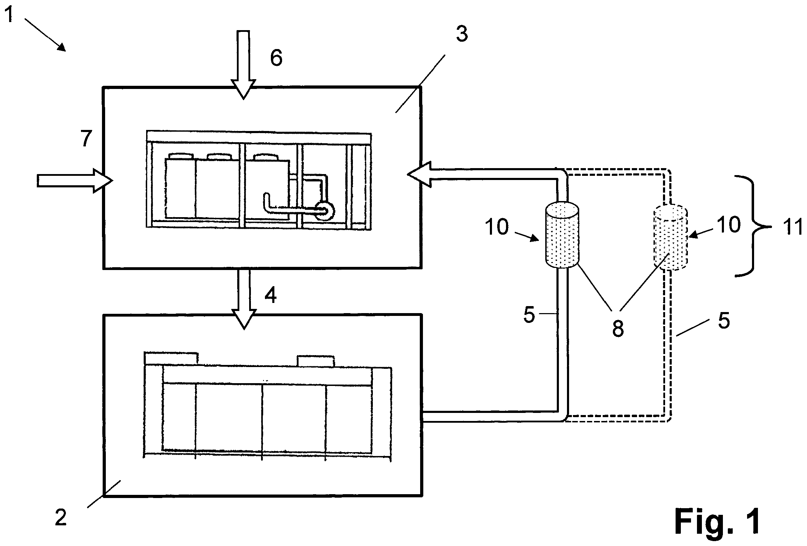

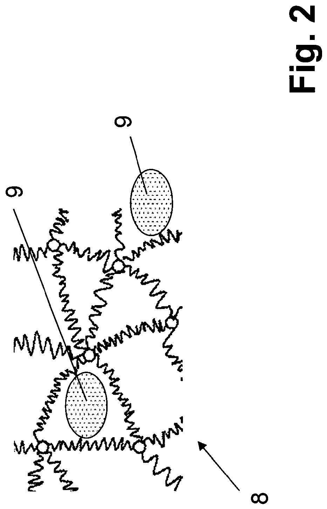

Um dies zu vermeiden, ist die Anlage 1 für eine Reinigung oder Aufbereitung der CIP-Medien durch Adsorption der Aromastoffe oder deren Aromate in einem adsorbierenden polymeren Material 8 ausgebildet. Wie in der Fig. 2 schematisch dargestellt, erfolgt die Adsorption der dort schematisch mit 9 bezeichneten Aromastoffe bzw. Aromate u.a. durch Einlagerung in die die von den Polymerketten gebildete Polymerstruktur des Materials 8, erfindungsgemäß Polyethylen. Bei der in der Fig. 1 dargestellten Anlage 1 erfolgt die Aufbereitung der CIP-Medien in einer Adsorptionseinheit oder -strecke 11, umfassend eine Filtereinrichtungen 10, die im CIP-Rücklauf 5 vorgesehen ist. Bei Verwendung von mehreren CIP-Medien ist vorzugweise für jedes CIP-Medium oder aber für eine Gruppe gleichartiger CIP-Medien (z.B. Wasser) jeweils ein eigenständiger CIP-Rücklauf 5 mit einem solchen Filter 10 vorgesehen.

Das jeweilige Filter 10 enthält das adsorbierende polymere Material 8 beispielsweise in Form eines Granulats, idealerweise in Form in einer Kartusche oder in einem mit dem Granulat gefüllten von dem CIP-Medium durchströmbaren porösen Beutel oder Sack. Das adsorbierende polymere Material 8 kann zusätzlich hierzu oder aber anstelle hiervon auch in anderer Form zum Einsatz kommen, beispielsweise als Folie und/oder als Folienstreifen, als gegossene oder extrudierte Formstücke, als Membran, als Netz, als Gitter, als Pulver usw. Das adsorbierende polymere Material 8 wird in regelmäßigen Abständen, spätestens aber am Ende seiner Adsorptionskapazität ausgetauscht.

Die Erfindung wurde voranstehend an einem Ausführungsbeispiel beschrieben. Es versteht sich, dass zahlreiche Änderungen sowie Abwandlungen möglich sind.

So ist es beispielsweise möglich, die CIP-Medien nicht im CIP-Rücklauf 5 mit dem adsorbierenden polymeren Material 8 zu behandeln, sondern anstelle hiervon oder auch zusätzlich hierzu die Behandlung mit dem adsorbierenden polymeren Material 8 innerhalb des Aggregats 3 oder in einem anderen Teil der Anlage 1 vorzunehmen, beispielsweise durch Einsatz des adsorbierenden polymeren Materials 8 in einem Behandlungskreislauf des Aggregates 3 oder aber durch Bereitstellen des adsorbierenden polymeren Materials 8 in einem Vorrichtungsbehälter oder in einer Kammer, an die das betreffende CIP-Medium über den CIP-Rücklauf 5 zurückgeführt wird.

Ebenfalls umfasst ist somit auch eine Vorrichtung zur Reinigung von CIP-Medien, wobei diese eine Adsorptionseinheit oder Adsorptionsstrecke 11 umfasst, oder wobei diese mit einer solchen Adsorptionseinheit oder Adsorptionsstrecke 11 verbunden ist, die dazu dient, Aromastoffe und/oder Aromate 9 mittels polymeren adsorbierenden Materialien 8 zu entfernen. Dabei kann die Adsorptionseinheit oder Adsorptionsstrecke 11 einen Tank, Behälter oder Filter 10 umfassen oder hieraus gebildet sein, in welchem ein adsorbierendes polymeres Materials 8 als Schüttung oder Formkörper einbringbar und im bestimmungsgemäßen Betrieb immobil befestigt oder positioniert gehalten werden.

Bei einer alternativen Vorrichtung strömen die Adsorptionsmittel zumindest für eine Teilstrecke bzw. in einem hierfür geeigneten Leitungsbereich mit dem CIP-Medium mit und werden durch geeignete Abscheideeinheiten zurückgehalten bzw. abgeschieden.

Generell besteht die Möglichkeit vorgenannte Adsorptionseinheit oder Adsorptionsstrecke 11 bzw. das adsorbierende polymere Material wieder zu regenerieren und hierfür entsprechende Verfahrensschritte vorzusehen.

### Bezugszeichenliste

- 1: Anlage
- 2: Behälterbehandlungsmaschine
- 3: Aggregat zur Bereitstellung der CIP-Medien
- 4: CIP-Vorlauf
- 5: CIP-Rücklauf
- 6, 7: Pfeil
- 8: adsorbierendes polymeres Material
- 10: Aromastoff
- 10: Filter
- 11: Adsorptionseinheit oder Adsorptionsstrecke

## Patentansprüche

1. Verfahren zur Aufbereitung von bei Anlagen zur Behandlung von Behältern verwendeten flüssigen CIP-Medien (CIP: cleaning-in-place),
wobei die Anlage eine Füllmaschine zum Befüllen von Flaschen oder anderen Behältern mit Getränken ist, **dadurch gekennzeichnet, dass** in dem jeweiligen CIP-Medium vorhandene Aromastoffe (9) aus den Gruppen der Aldehyde, Ketone, Ester, Phenole, Anisole und/oder Heteroaromate durch Adsorption mit einem polymeren adsorbierenden Material (8) entfernt werden, wobei als adsorbierendes polymeres Material (8) Polyethylen verwendet wird, und wobei die Aufbereitung des CIP-Mediums
- in einem Reinigungskreislauf eines Aggregates (3) zur Bereitstellung des CIP-Mediums erfolgt oder
- in einem CIP-Rücklauf (5) erfolgt, über den das CIP-Medium von einer mit diesem Medium behandelten Behälterbehandlungsmaschine (2) an ein Aggregat (3) zur Bereitstellung des CIP-Mediums zurückgeführt wird.

2. Verfahren nach Anspruch 1, **dadurch gekennzeichnet, dass** das adsorbierende polymere Material (8) als Granulat und/oder als Folie und/oder als Folienstreifen und/oder als Formstück und/oder als Membran und/oder als Netz und/oder als Gitter und/oder als Pulver verwendet wird.

3. Verfahren nach einem der vorhergehenden Ansprüche 1 oder 2, **dadurch gekennzeichnet, dass** das adsorbierende polymere Material (8) in einem Mengenbereich von 2g/L - 200g/L vorzugsweise von 6g/L - 60g/L zum Einsatz gebracht wird, wobei g die Menge des adsorbierenden polymeren Materials (8) in Gramm und L die Menge des zu reinigenden oder aufzubereitenden CIP-Mediums in Litern sind.

4. Verfahren nach einem der vorhergehenden Ansprüche, **dadurch gekennzeichnet, dass** die Aufbereitung des CIP-Mediums durch Bereitstellen des adsorbierenden polymeren Materials (8) in einem das CIP-Medium aufnehmenden Raum erfolgt.

5. Anlage mit einer Behälterbehandlungsmaschine (2) in Form einer Füllmaschine zum Befüllen von Flaschen oder anderen Behältern mit Getränken, wobei der Behälterbehandlungsmaschine (2) ein Aggregat (3) zugeordnet ist, mittels welchem CIP-Medien (CIP: cleaning-in-place) für eine CIP-Reinigung der Behälterbehandlungsmaschine (2) bereitgestellt werden können, und wobei bei der CIP-Reinigung zumindest sämtliche mit dem Produkt in Kontakt kommende Bereiche dieser Behälterbehandlungsmaschine (2) von dem jeweiligen CIP-Medium durchströmbar sind, wobei CIP-Medien der Behälterbehandlungsmaschine (2) jeweils über einen CIP-Vorlauf (4) zuführbar und über einen CIP-Rücklauf (5) abführbar und an das Aggregat (3) zurückführtbar sind, in welchem CIP-Medien getrennt gesammelt und für eine erneute Verwendung in einem Stapeltank aufbereitbar sind,
**dadurch gekennzeichnet, dass**
zur Aufbereitung der CIP-Medien eine Adsorptionseinheit oder -strecke (11) zur Adsorption der Aromastoffe (9) an einem adsorbierenden polymeren Material (8) vorgesehen ist, wobei das adsorbierende polymere Material Polyethylen ist, und wobei entweder
- die Adsorptionseinheit oder -strecke (11) in dem Rücklauf (5) vorgesehen ist, welche eine Filtereinrichtungen (10) zur Aufnahme des adsorbierenden polymeren Materials (8) umfasst oder
- innerhalb des Aggregats 3 ein Behandlungskreislauf vorgesehen ist, in welchem das adsorbierende polymere Material (8) einsetzbar ist.

6. Anlage nach Anspruch 5, **dadurch gekennzeichnet, dass** mehrere CIP-Rückläufe (5) mit jeweils einem Filter (10) vorgesehen sind.

## Claims

1. Method for processing used liquid CIP media (CIP: cleaning-in-place) in plants for treating containers, wherein the plant is a filling machine for filling bottles or other containers with beverages, **characterised in that** aromatic substances (9) present in the respective CIP medium are removed from the groups of the aldehydes, ketones, esters, phenols, anisoles, and/or heteroaromatics, by adsorption with a polymeric adsorbent material (8), wherein, as the polymeric adsorbent material (8), polyethylene is used, and wherein the processing of the CIP medium
- takes place in a cleaning circuit of an apparatus (3) for the provision of the CIP medium, or
- in a CIP return path (5), by means of which the CIP medium is conveyed back from a container treatment machine (2) treated with this medium to an apparatus (3) for the supply of the CIP medium.

2. Method according to claim 1, **characterised in that** the polymeric adsorbent material (8) is used as a granulate and/or as a film and/or as film strips and/or as a shaped element and/or as a membrane and/or as a network and/or as a mesh and/or as a powder.

3. Method according to any one of the preceding claims 1 or 2, **characterised in that** the polymeric adsorbent material (8) is brought into use in a quantity range from 2g/L -200g/L, preferably from 6g/L - 60g/L, wherein g is the quantity of the polymeric adsorbent material (8) in gram, and L is the quantity in litres of the CIP medium which is to be cleaned or treated.

4. Method according to any one of the preceding claims, **characterised in that** the preparation of the CIP medium takes place by the provision of the polymeric adsorbent material (8) in a space accommodating the CIP medium.

5. Plant with a container treatment machine (2) in the form of a filling machine for the filling of bottles or other containers with beverages, wherein an apparatus (3) is assigned to the container treatment machine (2), by means of which CIP media (CIP: cleaning-in-place) can be provided for a CIP cleaning of the container treatment machine (2), and wherein, during the CIP cleaning, at least all of the regions of this container treatment machine (2) which come in contact with the product can be flowed through by the respective CIP medium, wherein CIP media can be conveyed to the container treatment machine (2) by means of a CIP inflow (4) and, by means of a CIP outflow (5), can be conveyed away and conveyed back to the apparatus (3), in which CIP media are collected separately and can be made available for reuse in a stacking tank,
**characterised in that**
for the preparation of the CIP media, an adsorption unit or segment (11) is provided for the adsorption of the aromatic substances (9) by a polymeric adsorbent material (8), wherein the polymeric adsorbent material is polyethylene, and wherein either
- the adsorption unit or segment (11) is provided in the return flow (5), which comprises a filter device (10) for accommodating the polymeric adsorbent material (8), or
a treatment circuit is provided inside the apparatus 3 in which the polymeric adsorbent material (8) can be inserted.

6. Plant according to claim 5, **characterised in that** several CIP return flows (5) are each provided with a filter (10).

## Revendications

1. Procédé de préparation de milieux CIP (CIP : cleaning-in-place) liquides utilisés dans des installations pour le traitement de contenants,
dans lequel l'installation est une machine de remplissage pour remplir des bouteilles ou d'autres contenants de boissons, **caractérisé en ce que**
des aromatisants (9) présents dans le milieu CIP concerné, issus des groupes des aldéhydes, cétones, esters, phénols, anisols et/ou hétéroaromates sont supprimés par adsorption avec un matériau (8) polymère adsorbant,
dans lequel du polyéthylène est utilisé en tant que matériau (8) polymère adsorbant,
et dans lequel la préparation du milieu CIP
- est effectuée dans un circuit de nettoyage d'un groupe (3) pour fournir le milieu CIP ou
- est effectuée dans un conduit de retour CIP (5), par l'intermédiaire duquel le milieu CIP est ramené depuis une machine de traitement de contenants (2) traitée avec ledit milieu à un groupe (3) pour fournir le milieu CIP.

2. Procédé selon la revendication 1, **caractérisé en ce que** le matériau (8) polymère adsorbant est utilisé en tant que granulat et/ou en tant que film et/ou en tant que ruban de film et/ou en tant que pièce façonnée et/ou en tant que membrane et/ou en tant que filet et/ou en tant que grille et/ou en tant que poudre.

3. Procédé selon l'une quelconque des revendications précédentes 1 ou 2, **caractérisé en ce que** le matériau (8) polymère adsorbant est employé dans une plage de quantités de 2 g/L - 200 g/L, de préférence de 6 g/L - 60 g/L, dans lequel g est la quantité du matériau (8) polymère adsorbant en grammes et L est la quantité du milieu CIP à nettoyer ou à préparer en litres.

4. Procédé selon l'une quelconque des revendications précédentes, **caractérisé en ce que** la préparation du milieu CIP est effectuée en fournissant le matériau (8) polymère adsorbant dans un espace recevant le milieu CIP.

5. Installation avec une machine de traitement de contenants (2) sous la forme d'une machine de remplissage pour remplir des bouteilles ou d'autres contenants de boissons, dans laquelle est associé à la machine de traitement de contenants (2) un groupe (3), au moyen duquel des milieux CIP (CIP : cleaning-in-place) peuvent être fournis pour un nettoyage CIP de la machine de traitement de contenants (2), et dans laquelle lors du nettoyage CIP, au moins toutes les zones, venant en contact avec le produit, de ladite machine de traitement de contenants (2) peuvent être traversées par le milieu CIP concerné, dans laquelle des milieux CIP peuvent être amenés à la machine de traitement de contenants (2) respectivement par l'intermédiaire d'un conduit d'arrivée CIP (4) et peuvent être évacués et ramenés au groupe (3) par l'intermédiaire d'un conduit de retour CIP (5), dans laquelle des milieux CIP sont collectés séparément et peuvent être préparés pour une nouvelle utilisation dans une cuve de stockage,
**caractérisée en ce que**
pour préparer les milieux CIP, une unité ou une ligne d'adsorption (11) pour l'adsorption des aromatisants (9) est prévue au niveau d'un matériau (8) polymère adsorbant, dans laquelle le matériau polymère adsorbant est du polyéthylène, et dans laquelle soit
- l'unité ou la ligne d'adsorption (11) est prévue dans le conduit de retour (5), laquelle comprend un dispositif de filtration (10) pour recevoir le matériau (8) polymère adsorbant, soit
- est prévu à l'intérieur du groupe (3) un circuit de traitement, dans lequel le matériau (8) polymère adsorbant peut être employé.

6. Installation selon la revendication 5, **caractérisée en ce que** sont prévus plusieurs conduits de retour CIP (5) avec respectivement un filtre (10).
